# EUROPÄISCHE PATENTANMELDUNG

(11) **EP 3 361 221 A1**
(43) Veröffentlichungstag der Anmeldung: **15.08.2018**
(21) Anmeldenummer: 18155918.8
(22) Anmeldetag: 09.02.2018
(51) Int. Cl.: G01D 5/14

(54) **SENSOR ZUR POSITIONSBESTIMMUNG EINES ANTRIEBSSYSTEMS**

(30) Priorität: 13.02.2017 DE 102017001386
(71) Anmelder: Marantec Antriebs- und Steuerungstechnik GmbH & Co. KG., 33428 Marienfeld (DE)
(72) Erfinder: Hörmann, Michael, 33790 Halle/Westfalen (DE)
(74) Vertreter: Laufhütte, Dieter

(57) **Zusammenfassung**

Die vorliegende Erfindung betrifft einen Sensor (1) zur Positionsbestimmung eines Antriebssystems (2), umfassend: einen Magnetsensor (3), der dazu ausgelegt ist, die Drehstellung eines mit dem Antriebssystem verknüpften Magneten (4) zu bestimmen, mindestens einen Hall-Sensor (5), der dazu ausgelegt ist, eine Drehbewegung und eine Drehrichtung des Magneten zu bestimmen, so dass die Umdrehungen des Magneten zählbar sind, eine Mikrocontroller-Einheit, die dazu ausgelegt ist, die Daten des Magnetsensors (3) und des Hall-Sensors auszuwerten und an das Antriebssystem zu übertragen, und einen Akku, der über eine Ladeelektronik mit einer Spannungsversorgung des Sensors verbunden ist und eine alternative Spannungsversorgung für den Sensor darstellt, wobei bei einem Ausfall der Spannungsversorgung der Sensor dazu ausgelegt ist, dann, wenn der Hall-Sensor keine Drehbewegung des Magneten erfasst, nur den Hall-Sensor und die Mikrocontroller-Einheit mit Energie aus dem Akku zu versorgen, und dann, wenn der Hall-Sensor eine Drehbewegung des Magneten erfasst, mindestens einen weiteren Bestandteil des Sensors mit Energie aus dem Akku zu versorgen.

## Beschreibung

Die vorliegende Erfindung betrifft einen Sensor zur Positionsbestimmung eines Antriebssystems. Insbesondere eignet sich dieser Sensor zur Positionsbestimmung für einen Torantrieb, wie zum Beispiel ein Garagentor oder ein Zufahrtstor, die mit einem solchen Antriebssystem angetrieben werden.

Gewöhnlich arbeitet ein solcher Sensor bei Betrieb des Antriebssystems. Das Antriebssystem wird typischerweise von einer externen Stromquelle versorgt, sodass gleichlaufend mit dem Betrieb des Antriebssystems auch der Sensor mit Strom versorgt wird.

Bei der Umsetzung in einem Torantrieb ist es von Vorteil, wenn für ein automatisches Öffnen des Tores die Position des Antriebssystems bekannt ist. Der Antrieb des Antriebsystems wird auf die aktuelle Position des Tores angepasst. Es kann jedoch vorkommen, dass die automatisch steuerbaren Antriebssysteme über einen längeren Zeitraum von Hand betrieben werden, was dazu führt, dass bei einem erneuten automatischen Antreiben die korrekte Position des Antriebssystems nicht zur Verfügung steht, was eine schlechteren Öffnungs- oder Schließvorgang bedingt. Jedoch nicht nur das händische Betätigen des Antriebssystems, sondern auch ein Spannungsausfall kann zu dem unerwünschten Ergebnis führen, wonach die Positionsbestimmung des Antriebssystems nicht mehr eindeutig nachvollzogen werden kann.

Lediglich für den Fall, dass das Antriebssystem mit einer Welle zusammenwirkt, die weniger als eine vollständige Umdrehung ausführt, kann nach einem Spannungsausfall mit Hilfe eines Single-Turn-Sensors auf die korrekte Position des Antriebssystems geschlossen werden. Eine solche Anordnung bedarf in Regel jedoch zusätzlicher Bauteile, da eine Ausgabewelle des Antriebssystems sich typischerweise öfter als einmal um seine eigene Achse dreht.

Für die korrekte Bestimmung der Position ist erforderlich, dass die bisher zurückgelegten Umdrehungen einer mit dem Antriebssystem verknüpften Welle gezählt werden, um einen korrekten Rückschluss auf die Position des Antriebssystems zu erhalten. Insbesondere soll auch nach einem Spannungsausfall die korrekte Position des Antriebssystems bestimmbar sein, auch wenn die überwachte Welle sich mehr als einmal um ihre Achse drehen kann.

Die vorliegende Erfindung überwindet die vorstehend aufgeführten Probleme, die bei einem Spannungsausfall oder bei einem Betrieb des Antriebssystems auftreten können, indem ein Sensor mit den Merkmalen des Anspruchs 1 vorgesehen ist.

Demnach umfasst der Sensor zu Positionsbestimmung eines Antriebssystems einen Magnetsensor, der dazu ausgelegt ist, die Drehstellung eines mit dem Antriebssystem verknüpften Magneten zu bestimmen, mindestens einen Hall-Sensor, der dazu ausgelegt ist, eine Drehbewegung und eine Drehrichtung des Magneten zu bestimmen, sodass die Umdrehungen des Magneten zählbar sind, eine Mikrocontroller-Einheit, die dazu ausgelegt ist, die Daten des Magnetsensors und des Hall-Sensors auszuwerten und an das Antriebssystem zu übertragen, und einen Akku, der über eine Ladeelektronik mit einer Spannungsversorgung des Sensors verbunden ist und eine alternative Spannungsversorgung für den Sensor darstellt, wobei bei einem Ausfall der Spannungsversorgung der Sensor dazu ausgelegt ist, dann, wenn der Hall-Sensor keine Drehbewegung des Magneten erfasst, nur den Hall-Sensor und die Mikrocontroller-Einheit mit Energie aus dem Akku zu versorgen, und dann, wenn der Hall-Sensor eine Bewegung des Magneten erfasst, mindestens einen weiteren Bestandteil des Sensors mit Energie aus dem Akku zu versorgen.

Bei einem Ausfall der Spannungsversorgung ist es demnach möglich, die Drehstellung eines mit dem Antriebssystem verknüpften Magneten nachzuvollziehen. Dabei wird, um Energie zu sparen, erst bei einer tatsächlichen Drehung des Magneten, die über den Hall-Sensor erfasst wird, die erforderliche Kombination von zur Bestimmung der Position der Antriebssystems erforderliche Komponenten mit Strom versorgt. Dies führt insgesamt zu einer besseren Energieausnutzung des Akkus, da das vergleichsweise energieintensive Betreiben des Magnetsensors nicht durchgehend erforderlich ist und eine Schonung des Akkus erlaubt. Dauerhaft wird lediglich der Hall-Sensor mit Strom versorgt, der beim Erfassen einer Drehbewegung des zu überwachenden Magneten als Auslöser für die Aktivierung der mindestens einen weiteren Komponenten des Sensors dient.

Nach einer weiteren optionalen Modifikation der Erfindung ist die Mikrocontroller-Einheit dazu ausgelegt, bei einem Ausfall der Spannungsversorgung, dann, wenn der Hall-Sensor keine Drehbewegung des Magneten erfasst, aus einem Normalmodus in einen Stromsparmodus (sogenannter power-down-Modus) überzugehen, und dann, wenn der Hall-Sensor eine Drehbewegung des Magneten erfasst, den Stromsparmodus zu verlassen und in den Normalzustand überzugehen. Dieses Merkmal verbessert die Energieeffizienz weiter, da in einem Zustand, in dem der zu überwachende Magnet, der Rückschluss auf die Position des Antriebssystems liefert, keine Bewegung ausführt, die Mikrocontroller-Einheit des Sensors besonders wenig Strom benötigt. So wird die verfügbare Zeit, in der der Sensor ausschließlich mit der in dem Akku vorhandenen Energie betrieben werden kann, weiter verlängert.

Dabei kann vorgesehen sein, dass der durch die Mikrocontroller-Einheit benötigte Strom im Stromsparmodus kleiner oder gleich 50 µA ist. Aufgrund dieses geringen Stromverbrauchs erreicht man sehr lange Laufzeiten im Akkubetrieb.

Vorzugsweise umfasst der Sensor ferner einen zweiten Hall-Sensor, der von dem ersten Hall-Sensor versetzt angeordnet ist und dazu dient, die Drehbewegung und die Drehrichtung des Magneten in vereinfachter Weise zu bestimmen. Der mindestens eine Hall-Sensor oder die zwei Hall-Sensoren ermöglichen eine Richtungserkennung einer Drehbewegung des zu überwachenden Magneten. Auch werden mithilfe des mindestens einen Hall-Sensors die Umdrehungen des Magneten gezählt, die neben der Absolutposition des zu überwachenden Magneten für einen korrekten Rückschluss auf die Position des Antriebssystems erforderlich sind.

Nach einer Fortbildung der Erfindung ist ein weiterer Bestandteil des Sensors, der bei einem Ausfall der Spannungsversorgung und einem Erfassen eine Drehbewegung des Magneten durch den Hall-Sensor, Energie über den Akku bezieht, der Magnetsensor und/oder ein zweiter Hall-Sensor.

Durch die Versorgung des Magnetsensors wird bei einer Drehbewegung der Magneten die absolute Drehposition bzw. Drehstellung des zu überwachenden Magneten bestimmt. In Kombination mit der Anzahl der vollen Umdrehungen kann nun auf die exakte Position des Antriebssystems zurückgeschlossen werden. Die Anzahl der zurückgelegten Umdrehungen kann dabei in der Mikrocontroller-Einheit abgespeichert werden und steht so auch nach einem Spannungsausfall dem Sensor zur Verfügung.

Vorzugsweise kann vorgesehen sein, dass der Hall-Sensor versetzt zu dem Magnetsensor angeordnet ist.

Nach einer Fortbildung der Erfindung ist der durch den Sensor zu überwachende Magnet ein Rundmagnet, der vorzugsweise jeweils über einen Bereich von 180° einen magnetischen Nordpol und über einen sich daran anschließenden Bereich von 180° einen magnetischen Südpol aufweist. Der Rundmagnet ist demnach hälftig geteilt und weist auf der einen Hälfte einen magnetischen Südpol und auf der anderen Hälfte einen magnetischen Nordpol auf.

Nach einer weiteren optionalen Modifikation der Erfindung rotiert der durch den Sensor zu überwachende Magnet in Abhängigkeit von einer Ausgangswelle des Antriebssystems. Die Rotation des zu überwachenden Magneten ist dabei von der Rotation der Ausgangswelle des Antriebssystems abhängig kann jedoch über eine Anordnung untersetzt oder übersetzt zu der Ausgangswelle sein. Durch die Drehung des Magneten kann jedoch ein Rückschluss auf die Umdrehungen und die Drehstellung der Ausgangswelle und somit auch die Position des Antriebssystems gezogen werden.

Ferner kann nach der Erfindung vorgesehen sein, dass die Bauteile des Sensors auf einer Platine angeordnet sind. Vorzugsweise ist der mindestens eine Hall-Sensor ein Super-Low-Power Hall-Sensor. Dieser ist auch unter anderem als Ultra-Low-Power Hall-Sensor bekannt und weist eine besonders geringe Stromaufnahme auf.

Die Erfindung betrifft ferner eine Antriebsanordnung nach einer der vorstehen aufgeführten Varianten, insbesondere eine Antriebsanordnung zum Antreiben eines Tores, wie ein Garagentor oder ein Zufahrtstor.

Weitere Einzelheiten, Merkmale und Vorteile der Erfindung werden anhand der nachfolgenden Beschreibung der einzigen Figur ersichtlich. Dabei zeigt:

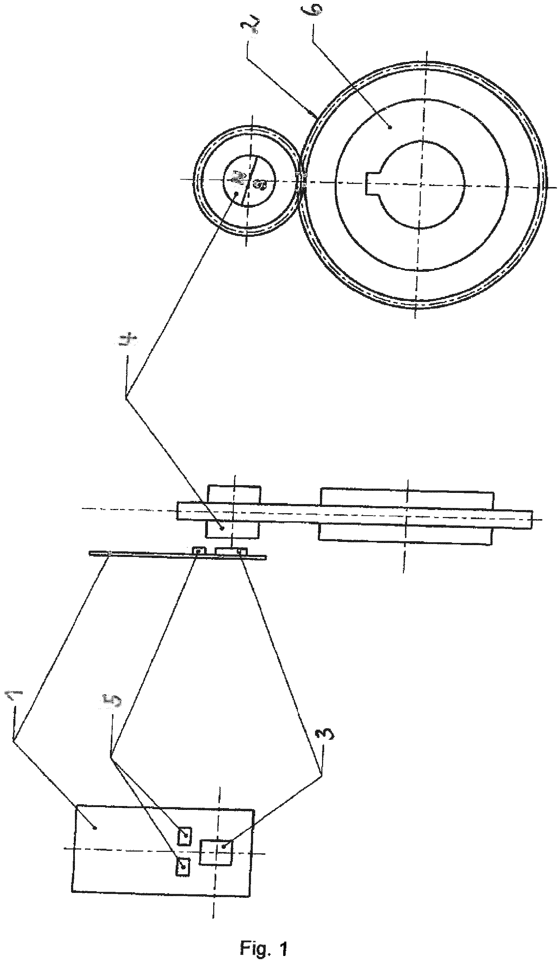

- Fig. 1:: eine schematische Darstellung des Sensors 1 und des zu überwachenden Magneten 4.

Fig. 1 zeigt auf der linken Seite eine Draufsicht auf den Sensor 1, der in dieser Ausführungsform mit zwei Hall-Sensoren 5 versehen ist. Diese sind versetzt zueinander angeordnet und dienen dazu, eine Drehbewegung und eine Drehrichtung des Magneten zu bestimmen. Versetzt von den beiden Hall-Sensoren 5 ist der Magnetsensor 3 angeordnet, der dazu in der Lage ist, die absolute Drehstellung eines mit dem Antriebssystems 2 verknüpften Magneten 4 zu bestimmen. Die Hall-Sensoren 5 dienen zum Zählen der Umdrehungen des Magneten 4 und zum Erkennen der Drehrichtung.

Im mittleren Bereich der Fig. 1 ist das Zusammenwirken des Sensors 1 mit dem zu überwachenden Magneten 4 der mit dem Antriebssystem verknüpft ist, dargestellt. Hierzu ist der in seiner Drehung zu überwachende Manget 4 oberhalb des Magnetsensors 3 angeordnet, sodass der Manget 4 mit dem Magnetsensor 3 und den Hall-Sensoren des Sensors 1 zur Positionsbestimmung des Antriebssystems 2 zusammenwirken kann. Der Manget 4 ist dazu in eine räumlich Nähe mit den Bestandteilen des Sensors 1 zu bringen, die von der Stärke des Magnets 4 abhängt, in der das Magnetfeld in ausreichender Stärke mit dem Sensor 1 zusammenwirkt.

Die rechte Seite dieser Figur zeigt eine von einer Vielzahl von Möglichkeiten, den Magneten 4 mit einer Ausgangswelle 6 des Antriebssystems zu verknüpfen. Vorliegend wurde eine Verzahnung gewählt, die eine Verbindung zwischen der Ausgangwelle 6 und dem Magneten 4 herstellt. Die kämmende Zahnverbindung sorgt dafür, dass bei einer Rotation der Ausgangswelle ebenfalls eine Rotation des Magneten durchgeführt wird. Da mit Hilfe der Hall-Sensoren 5 die Umdrehungen des Magneten 4 nachvollzogen werden kann, ist es nicht erforderlich, den Magneten mit Hilfe eines Getriebes oder einer sonstigen Anordnung auf eine Bewegung von kleiner oder gleich 360° zu beschränken (zur Messung mit sogenannten Single-Turn-Sensoren, bei denen sich der zu überwachende Magnet maximal um 360° dreht).

Der Magnetsensor erkennt die Position innerhalb einer vollständigen Umdrehung des Magneten, kann also die absolute Stellung des Magneten innerhalb von 360° auflösen. Der mindestens eine Hall-Sensor 5 ermöglicht eine Richtungserkennung oder Drehbewegung des Magneten 4 und dient auch zum Erkennen der vollen Umdrehungen des Magneten. Das Vorhandensein mehrerer Hall-Sensoren 5 vereinfacht diese Erkennung. Die Hall-Sensoren dienen weiterhin dazu, die Umdrehungen des Magneten zu zählen und können nach einer vorteilhaften Ausführung durch Super-Low-Power Hall-Sensoren ausgeführt sein, mit denen in einen spannungslosen Zustand eine Stromversorgung mit Hilfe des Akkus besonders lange aufrecht erhalten werden kann. Um eine unnötige Belastung des Akkus zu vermindern, wird der Magnetsensor 3 abgeschaltet und die Mikrocontroller-Einheit kann zudem in einem Stromsparmodus versetzt werden. Dadurch reduziert sich der Standby-Strom auf circa 50 µA, wodurch extrem lange Akkulaufzeiten ermöglicht werden. Erkennt der mit Strom versorgte Hall-Sensor eine Drehbewegung des Rundmagneten 4, wird die Mikrocontroller-Einheit aus dem Stromsparzustand zurückgeholt, um eine korrekte Bestimmung der Position des Antriebssystems zu ermöglichen. Ist die Versorgungsspannung wieder vorhanden, wird der Akku geladen und das System bleibt aktiv.

Mithilfe der vorliegenden Erfindung können spannungsfreie Zustände über einen besonders langen Zeitraum überbrückt werden ohne dass ein Verlieren der Position des Antriebssystems stattfindet, auch wenn innerhalb des spannungsfreien Zustands die Position des Antriebsmittels von Hand oder anderweitig verändert wird.

In der Figur nicht dargestellt ist ein Übertragungsmittel, dass zwischen dem Sensor 1 und dem Antriebssystem 2 Daten überträgt. Für diese Kommunikation sind drei Übertagungsmodi vorhanden, die sich in ihrer Baudrate unterscheiden. Zur Verfügung steht beispielsweise die Baudrate 9600 und 19200 mit dem Kostal Protokoll, wobei mit der Baudrate 115200 ein neues Multi-Turn-Protokoll übertragen werden kann.

## Patentansprüche

1. Sensor (1) zur Positionsbestimmung eines Antriebssystems (2), umfassend:
einen Magnetsensor (3), der dazu ausgelegt ist, die Drehstellung eines mit dem Antriebssystem (2) verknüpften Magneten (4) zu bestimmen,
mindestens einen Hall-Sensor (5), der dazu ausgelegt ist, eine Drehbewegung und eine Drehrichtung des Magneten (4) zu bestimmen, so dass die Umdrehungen des Magneten (4) zählbar sind,
eine Mikrocontroller-Einheit, die dazu ausgelegt ist, die Daten des Magnetsensors (3) und des Hall-Sensors (5) auszuwerten und an das Antriebssystem (2) zu übertragen, und
einen Akku, der über eine Ladeelektronik mit einer Spannungsversorgung des Sensors (1) verbunden ist und eine alternative Spannungsversorgung für den Sensor (1) darstellt, wobei
bei einem Ausfall der Spannungsversorgung der Sensor (1) dazu ausgelegt ist, dann, wenn der Hall-Sensor (5) keine Drehbewegung des Magneten (4) erfasst, nur den Hall-Sensor (5) und die Mikrocontroller-Einheit mit Energie aus dem Akku zu versorgen, und dann, wenn der Hall-Sensor (5) eine Drehbewegung des Magneten (4) erfasst, mindestens einen weiteren Bestandteil des Sensors (1) mit Energie aus dem Akku zu versorgen.

2. Sensor (1) nach Anspruch 1, wobei die Mikrocontroller-Einheit dazu ausgelegt ist, bei einem Ausfall der Spannungsversorgung dann, wenn der Hall-Sensor (5) keine Drehbewegung des Magneten (4) erfasst, in einen Stromsparmodus überzugehen, und dann, wenn der Hall-Sensor (5) eine Drehbewegung des Magneten (4) erfasst, den Stromsparmodus zu verlassen.

3. Sensor (1) nach Anspruch 2, wobei der durch die Mikrocontroller-Einheit benötigte Strom im Stromsparmodus kleiner oder gleich 50 µA ist.

4. Sensor (1) nach einem der vorhergehenden Ansprüche, ferner umfassend einen zweiten Hall-Sensor (5), der von dem ersten Hall-Sensor (5) versetzt angeordnet ist und dazu dient, die Drehbewegung und die Drehrichtung des Magneten (4) in vereinfachter Weise zu bestimmen.

5. Sensor (1) nach einem der vorhergehenden Ansprüche, wobei ein weiterer Bestandteil des Sensors (1), der bei einem Ausfall der Spannungsversorgung und wenn der Hall-Sensor (5) eine Drehbewegung des Magneten (4) erfasst, Energie über den Akku bezieht, der Magnetsensor (3) und/oder ein zweiter Hall-Sensor (5) ist.

6. Sensor (1) nach einem der vorhergehenden Ansprüche, wobei der Hall-Sensor (5) versetzt zu dem Magnetsensor (3) angeordnet ist.

7. Sensor (1) nach einem der vorhergehenden Ansprüche, wobei der Magnet (4) ein Rundmagnet ist, der jeweils über einen Bereich von 180° einen magnetischen Nordpol und einen magnetischen Südpol aufweist.

8. Sensor (1) nach einem der vorhergehenden Ansprüche, wobei der Magnet (4) entsprechend wie eine Ausgangswelle (6) des Antriebssystems (2) rotiert.

9. Sensor (1) nach einem der vorhergehenden Ansprüche, wobei die Bauteile des Sensors (1) auf einer Platine angeordnet sind.

10. Sensor (1) nach einem der vorhergehenden Ansprüche, wobei der mindestens eine Hall-Sensor (5) ein super-low-power Hall-Sensor (5) ist.

11. Antriebsanordnung (2) mit einem Sensor (1) nach einem der vorhergehenden Ansprüche, insbesondere Antriebsanordnung zum Antreiben eines Tores, wie ein Garagentor oder ein Zufahrtstor.
